# EUROPEAN PATENT SPECIFICATION

(11) **EP 3 261 838 B1**
(45) Date of publication and mention of the grant of the patent: **03.04.2019**
(21) Application number: 16706585.3
(22) Date of filing: 25.02.2016
(51) Int. Cl.: B32B 27/08, B32B 27/32, B65D 65/40

(54) **LAMINATED FILM STRUCTURE BASED ON POLYETHYLENE ONLY**
LAMINIERTE FILMSTRUKTUR AUSSCHLIESSLICH BASIEREND AUF POLYETHYLEN
STRUCTURE DE FILM STRATIFIÉ UNIQUEMENT À BASE DE POLYÉTHYLÈNE

(30) Priority: 27.02.2015 EP 15156845
(43) Date of publication of application: 03.01.2018
(73) Proprietor: Borealis AG, 1220 Vienna (AT)
(72) Inventor: NIEDERSÜSS, Peter, 4312 Ried/Riedmark (AT); ACKERMANS, Nina, 3980 Tessenderlo (BE); CAVACAS, Paulo, 3140-166 Coutada (PT); DE WEVER, Willem, 3500 Belgium (BE)
(74) Representative: Dehns
(86) International application number: PCT/EP2016/053902
(87) International publication number: WO 2016/135213

(56) References cited:
- WO-A1-2011/029597
- WO-A1-2012/016938

## Description

This invention relates to laminated film structures comprising one first film being laminated to a second film and whereby the laminated film structures are based on polyethylene only, i.e. polymers other than polyethylene are substantially absent.
In particular the present invention relates to a laminated film structure based on polyethylene only, wherein the first film is an MDO film, which can be down-gauged to a film thickness below 30 µm, preferably to 25 µm and below, e.g. to a film thickness of 20 µm.

### Background art

Laminates are widely used in the packaging industry to form all manner of articles from food containers, like vacuum-formed packages, to stand up pouches and product labels. Typical products packaged in laminated films are coffee, milk, fruit juice, cheese or meat slices, pet food, shampoo pouches or other toiletries and pharmaceutical products
These laminates are typically transparent and are formed when a film is coated onto a substrate. Thus transparent laminated films are conventionally produced by laminating transparent mono- or multi-layered film on a transparent substrate.

Films used in this field need to possess certain properties to be of use in the industry. The film needs excellent optical properties, i.e. low haze, so as to be sufficiently transparent. The film needs to possess high levels of gloss to give off the necessary aesthetic appearance. It should also be capable of being printed upon.
Furthermore the film (which is conventionally multi-layered) needs to adhere to the substrate on which it is placed and the layers of film also need to adhere to each other without themselves delaminating. Critically, the film needs to be stiff, e.g. possess a high tensile modulus, in order to be used successfully. Finally, the film must also be capable of being manufactured rapidly and cheaply. Since the margins on many packaging products are small, it is important that packaging costs are kept to a very minimum.
In this regard therefore, it is obvious that thinner films are preferred since such films will be cheaper to manufacture as they require less raw material. However, the down gauging of films (i.e. making them thinner) is typically associated with a considerable loss of stiffness. The resulting films are simply not stiff enough to be of use in laminates. If a film lacks stiffness, it will cause problems in the lamination process. Such a film may be too soft to adhere successfully to a substrate or may be too delicate to handle in the lamination apparatus.

Currently, most laminates in the market are made with polyethylene (PE) film (mono or coex) laminated with another material to provide stiffness or other desired properties. Often this other material is polyethylene terephthalate (PET). There are also other structures where polypropylene and/or aluminum foil and/or polyamides (Nylon) are used.

Nowadays there is a trend to provide "100% PE" solutions, i.e laminates consisting of a PE film laminated to a further PE film structure, since such laminates based on a single class of resin can be more easily recycled. Recycling is a tool to improve sustainability and to safe resources and is therefore a topic of high priority.

For example EP 2 585 291 B1 describes laminated film structures being suitable for use in stand up pouches, which comprise a first film (film 1) comprising at least two layers and at least a second film (film 2) comprising at least 3 layers, whereby the laminated film structure is characterized by the substantial absence of polymers other than polyethylene. According to the examples film 1 as well as film 2 have a thickness of 60 µm and are both unoriented. WO 2012/016938 describes a multilayer film which comprises a core layer and two outer layers sandwiching the core layer, wherein the core layer comprises a bimodal ethylene/1-butene/C6-C12-alpha olefin and the first outerlayer comprises i) an LDPE, ii) the bimodal terpolymer as defined for the core layer, or iii) a metallocene-produced LLDPE with optionally an LDPE, and wherein the second outer layer comprises a metallocene-produced LLDPE and optionally a LDPE. WO 2011/029597 describes a heat sealable film comprising LDPE, LLDPE, metallocene-catalysed LLDPE (m-LLDPE) or blends of two or more thereof.

A further "100% PE" solution is promoted by Borealis. This solution comprises a BorLite-based MDO film (25 µm), which is laminated to a BorSape LLDPE blown film substrate (60 µm). A suitable BorLite grade for such an application is for example BorLite OPE795, which is a multimodal LLDPE with a density (ISO 1183) of 931 kg/m³, MFR (190°C, 2.16 kg; ISO 1133) of 0.2 g/10 min and a melting temperature (DSC, ISO 11357-3) of 127°C.
This MDO film of this full PE laminate structure is made of a blocked multilayer film of the structure A/B/B/B/C/C/B/B/B/A, wherein C is the blocking layer comprising BorLite and a plastomer (Queo 8201), B is a BorLite layer and A is a layer being composed of a high density polyethylene (HDPE). The primary film thickness is 125 µm (2 x 62.5 µm) before stretching and 25 µm after stretching.

So, although "100% PE" based laminated film structures are known, there is a steady need to further improve such structures by providing alternative film formulations which can provide films of very low thickness whilst maintaining tensile modulus, optical properties like gloss and transparency and other mechanical properties.

It was therefore an object of the present invention to provide such alternative film formulations, which allow even further down-gauging than known solutions, whilst improving or at least maintaining tensile modulus and furthermore maintaining the balance between optical properties like gloss and transparency and mechanical properties.

It has now been found that a particular uniaxial orientated multilayer (MDO) film comprising at least 3 layers can fulfil the above requirements and therefore yield a full PE lamination structure with advantageous properties.

The present invention therefore relates to a laminated film structure comprising one first film being laminated to one second film and whereby the laminated film structures are based on polyethylene only, whereby
a) the first film comprises at least one core layer (C) and two outer layers (O-1, O-2) sandwiching the core layer, wherein
   a₁) the core layer (C) comprises a bimodal ethylene/1-butene/C₆-C₁₂-alpha-olefin terpolymer, with a density between 926 kg/m³ to 950 kg/m³ and
   a₂) the two outer layers comprising unimodal HDPE with a density of more than 940 kg/m³ up to 970 kg/m³,
   the first film being uniaxial oriented in the machine direction (MD) in a draw ratio of 1:4 to 1:12.and having a film thickness after orientation of 10 to 27 µm and
b) the second film comprises at least one sealing layer, wherein
   b₁) the sealing layer comprises a blend of a metallocene produced linear low density polyethylene (mLLDPE) or an ethylene-based plastomer with a low density polyethylene (LDPE),
the second film having a film thickness of 50 to 100 µm,
wherein in the laminated film structures other polymers than ethylene based polymers are substantially absent.

The present invention additionally relates to the use of a first film as defined above, for producing laminated film structures, whereby the first film is uniaxial oriented in the machine direction (MD) and has a film thickness after orientation of 10 to 27 µm, preferably of 15 to 25 µm, more preferably of 18 to 22 µm.

The present invention furthermore relates to the use of such laminated film structures for stand up pouches.

### Ad first film:

The first film of the laminated film structure according to the present invention is a machine direction oriented multilayer film which comprises at least one core layer (C) and two outer layers (O-1, O-2) sandwiching the core layer.

### Core layer

The core layer (C) comprises a bimodal ethylene/1-butene/C₆-C₁₂-alpha-olefin terpolymer.

### Suitable terpolymers comprise

(A-1) a lower molecular weight (LMW) component of a homopolymer of ethylene and
(A-2) a higher molecular weight component (HMW) of a terpolymer of ethylene, 1-butene and a C₆-C₁₂-alpha-olefin.

The polyethylene component in this core layer must be bimodal, i.e. its molecular weight profile does not comprise a single peak but instead comprises the combination of two peaks (which may or may not be distinguishable) centred about different average molecular weights as a result of the fact that the polymer comprises two separately produced components. Bimodal polyethylenes are typically made in more than one reactor each having different conditions. The components are typically so different that they show more than one peak or shoulder in the diagram usually given as result of its GPC (gel permeation chromatograph) curve, where d(log(MW)) is plotted as ordinate vs log(MW), where MW is molecular weight. Thus, the bimodal polyethylene comprises a higher molecular weight component which corresponds to an ethylene terpolymer and a lower molecular weight component which corresponds to an ethylene homopolymer.
Preferably the C6-C12-alpha-olefins are selected from the group of 1-hexene, 4-methyl-1-pentene, 1-octene and 1-decene.
More preferably the polyethylene in the core layer is formed from an ethylene homopolymer and an ethylene butene/hexene terpolymer or ethylene butene/octene terpolymer.

Such bimodal polymers may be prepared for example by two stage polymerization or by the use of two different polymerization catalysts in a one stage polymerization. It is also possible to employ a dualsite catalyst. It is important to ensure that the higher and lower molecular weight components are intimately mixed prior to extrusion to form a film. This is most advantageously achieved by using a multistage process or a dual site catalyst, but could be achieved also through blending.

To maximise homogeneity, particularly when a blend is employed, it is preferred that the bimodal polyethylene used in the core layer is extruded prior to being extruded to form the film of the invention.
This pre-extrusion step ensures that the higher molecular weight component will be homogeneously distributed though the core layer and minimises the possibility of gel formation in the film.

Preferably the bimodal polyethylene is produced in a multi-stage polymerization using the same catalyst, e.g. a metallocene catalyst or preferably a Ziegler- Natta catalyst. Thus, two slurry reactors or two gas phase reactors could be employed. Preferably however, the bimodal polyethylene is made using a slurry polymerization in a loop reactor followed by a gas phase polymerization in a gas phase reactor.
A loop reactor - gas phase reactor system is well known as Borealis technology, i.e. a BORSTAR® reactor system. The bimodal polyethylene in the core layer is thus preferably formed in a two stage process comprising a first slurry loop polymerization followed by gas phase polymerization in the presence of a Ziegler-Natta catalyst.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerization may also be carried out in bulk where the reaction medium is formed from the monomer being polymerized.
For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a nonreactive gas such as nitrogen or low boiling point hydrocarbons such as propane together with monomer (e.g. ethylene).

Preferably, the lower molecular weight component is produced in a continuously operating loop reactor where ethylene is polymerized in the presence of a polymerization catalyst as stated above and a chain transfer agent such as hydrogen. The diluent is typically an inert aliphatic hydrocarbon, preferably isobutane or propane.
The higher molecular weight component can then be formed in a gas phase reactor using the same catalyst.
Where the higher molecular weight component is made as a second step in a multistage polymerization it is not possible to measure its properties directly. However, e.g. for the above described polymerization process of the present invention, the density, MFR2 etc. of the HMW component can be calculated using Kim McAuley's equations.
Thus, both density and MFR2 can be found using K. K. McAuley and J. F. McGregor: On-line Inference of Polymer Properties in an Industrial Polyethylene Reactor, AlChE Journal, June 1991, Vol. 37, No, 6, pages 825-835. The density is calculated from McAuley's equation 37, where final density and density after the first reactor is known. MFR2 is calculated from McAuley's equation 25, where final MFR2 and MFR2 after the first reactor are calculated.

The bimodal terpolymer used according to the invention comprises a lower molecular weight component (LMW) of a homopolymer of ethylene and a higher molecular weight component (HMW) of a terpolymer of ethylene, 1-butene and a C6-C12-alpha-olefin.
The expression "homopolymer of ethylene" used herein refers to a polyethylene that consists substantially, i. e. to at least 98 % by weight, preferably at least 99 % by weight, more preferably at least 99.5 % by weight, most preferably at least 99.8 % by weight of ethylene. As stated above the higher alpha-olefin comonomers are preferably C₆-C₁₂-alpha-olefins selected from the group of 1-hexene, 4-methyl-1-pentene, 1-octene and 1-decene.
More preferably 1-hexene or 1-octene, most preferably 1-hexene is used as second comonomer beside 1-butene.
Such bimodal terpolymers are known in the state of the art and are described e.g. in WO 03/066698 or WO 2008/034630 or are commercially available, such as BorShape™ FX1001 and BorShape™ FX1002 (both from Borealis AG, Vienna, Austria).

The lower molecular weight component (LMW) of the ethylene homopolymer has a weight average molecular weight preferably in the range of 20 000 to 50 000 g/mol, more preferably of 25 000 to 40 000 g/mol and a melt index MFR2 in the range of 50 to 3 200 g/10min, preferably in the range of 80 to 1 000 g/10min and more preferably in the range of 100 to 600 g/10min.
The density of the lower molecular weight component may range from 930 to 980 kg/m3, preferably from 940 to 975 kg/m3, more preferably 960 to 972 kg/m3.
The lower molecular weight component has preferably from 30 to 70 wt%, e.g. 40 to 60% by weight of the bimodal polyethylene with the higher molecular weight component forming 70 to 30 wt%, e.g. 60 to 40% by weight.
The higher molecular weight component has a lower MFR2 and a lower density than the lower molecular weight component.

The final bimodal terpolymer has a weight average molecular weight preferably in the range of 100 000 to 200 000 g/mol, and a Mw/Mn in the range of 5 to 20, preferably in the range of 8 to 18, more preferably in the range of 10 to 15.
The density of the final terpolymer is between 926 and 950 kg/m³, preferably between 927 to 945 kg/m³, and more preferably between 930 to 940 kg/m³.

Preferred terpolymers have a melt index (MI5) of 0.1 to 20 g/10 min (e.g. when measured at 190°C and 5.0 kg, according to standard ISO 1133), especially from 0.2 to 10 or from 0.5 to 5 g/10min, e.g. around 2.0 g/10min.
Preferred terpolymers have a melt index (MI2) of 0.01 to 6 g/10 min (e.g. when measured at 190°C and 2.16 kg, according to standard ISO 1133), especially from 0.05 to 3 or from 0.1 to 2 g/10 min, e.g. around 0.5 g/10min.

The overall comonomer content in the total polymer is 0.3 to 7.0 % by mol, preferably 0.6 to 4.5 % by mol, more preferably 1.0 to 3.5 % by mol and most preferably 1.2 to 2.3 % by mol. Butene is present in an amount of 0.1 to 3.0 % by mol, preferably 0.2 to 2.0 % by mol, more preferably 0.3 to 1.5 % by mol and most preferably 0.4 to 0.8 % by mol.
The C₆ to C₁₂ alpha olefin is present in an amount of 0.2 to 4.0 % by mol, preferably 0.4 to 2.5 % by mol, more preferably 0.7 to 2.0 % by mol and most preferably 0.8 to 1.5 % by mol.

In addition to the bimodal terpolymer the composition may also contain antioxidants, process stabilizers, slip agents, pigments, UV-stabilizers and other additives known in the art. Examples of stabilizers are hindered phenols, hindered amines, phosphates, phosphites and phosphonites.
Examples of pigments are carbon black, ultra marine blue and titanium dioxide.
Examples of other additives are e. g. clay, talc, calcium carbonate, calcium stearate, zinc stearate and antistatic additives like.

The additives can be added as single components or as part of a masterbatch as is known in the art.
In one embodiment it is preferred to add a pigment, preferably titanium dioxide to obtain white films, e.g. for providing better contrast. Most preferably this pigment is added as part of a masterbatch.

### Sandwiching layers

As identified above, the three-layer structure in accordance with the present invention comprises in addition to the core layer two layers sandwiching the core layer. The layers sandwiching the core layer are layers directly contacting the core layer, preferably without any adhesive layer or surface treatment applied.
The two outer layers which are sandwiching the core layer both comprise unimodal HDPE. HDPEs of use in the invention have a density of more than 940 kg/m3 and can be homopolymers or copolymers with at least one α-olefin having from 3 to 10 carbon atoms. Suitable HDPE preferably has a density within the range of about 941 kg/m3 to about 970 kg/m3. More preferably, the density is within the range of about 945 kg/m3 to about 965 kg/m3.

The HDPE polymer to be employed in accordance with the present invention may be a known and e.g. commercially available, polyethylene polymer or said HDPE polymer may be prepared using any coordination catalyst, typically ZN catalysts, Cr-catalyst as well as single site catalysts (SSC).

The melt flow rate (MFR) of the HDPE polymer to be employed for the outer layers in accordance with the present invention is not critical and can be varied depending on the mechanical properties desired for an end application. In one preferable embodiment MFR2 value in the range of from 0.05 to 10 g/10 min, preferably 0.1 to 7.0 g/10 min, more preferably from 0.2 to 5.0 g/10 min, yet more preferably 0.3 to 3.0 g/10 min, even more preferably 0.4 to 2.0 g/10 min an most preferably 0.5 to 1.3 g/10 min are desired.

The molecular weight distribution (MWD) expressed as Mw/Mn of the HDPE polymer to be employed in accordance with the present invention can vary in a broad range. MWD is preferably in the range from 2 to 20, preferably 2.5 to 15, more preferably 3 to 10 and most preferably 3.5 to 7.

HDPEs are very well known and are commercially available or can be prepared using well-documented polymerization processes, e.g. processes described above and by adjusting the process conditions to obtain the desired density of HDPE.
Thus the HDPE polymers to be employed in accordance with the present invention may be produced in principle using any polymerization method, including solution, slurry and gas phase polymerization.
I. a. commercial grades of HDPEs as highly feasible materials for layer(s) of the invention, like commercial grades available from Borealis e.g. VS4470, Alcudia® grades from Repsol and Reliance's commercial grades, e.g. F46003, can be mentioned as examples only, i.e. not limiting thereto.

The outer layers may also contain other polymer components if necessary and may also contain minor amounts of conventional additives such as antioxidants, UV stabilisers, acid scavengers, nucleating agents, anti-blocking agents, slip agents etc. as well as polymer processing agent (PPA). The additives can be added as single components or as part of a masterbatch as is known in the art.

Preferably the first film of the laminated film structure according to the invention is a three layer film, as described above, being an unblocked film having the structure O-1/C/O-2, wherein O-1 and O-2 correspond to the two outer layer as described above and C corresponds to the core layer (C) as described above.

In one embodiment of the invention it is nevertheless also possible to use a blocked film structure as first film.

In this case the first film has the structure O-1/C₁/B₁/B₁/C₁/O-2 or O-1/C_{1/}C₂/C₃/B₁/B₁/C₃/C₂/C₁/O-2, wherein O-1 and O-2 corresponds to the two outer layers as described above, C corresponds to the core layer (C) as described above and B is the blocking layer.
Preferably O-1/C₁/C₂/C₃/B₁/B₁/C₃/C₂/C₁/O-2 film structures are used, if the first film is a blocked film.

The blocking layer (B) is in this case composes of a blend of a terpolymer as described above for the core layer (C) and of a plastomer. In principle any blend ratio is suitable, as long as the blend fulfils its task as blocking layer.
The blend is composed of preferably 60 to 95wt%, more preferably 65 to 90 wt% and even more preferably 70 to 85 wt% of the terpolymer as described above for the core layer (C) and preferably 5 to 40 wt%, more preferably 10 to 35 wt% and even more preferably 15 to 30 wt% of the plastomer.

Suitable plastomers are preferably ethylene based plastomers.
The ethylene based plastomer is a copolymer of ethylene and propylene or a C₄ - C₁₀ alpha olefin.
Suitable C₄ - C₁₀ alpha-olefin include 1-butene, 1-hexene and 1-octene, preferably 1-butene or 1-octene and more preferably 1-octene.
Preferably copolymers of ethylene and 1-octene are used.
Suitable ethylene based plastomers have a density in the range of 0.860 - 0.915 g/cm³, preferably in the range of 0.870 to 0.910 g/cm³.

The MFR₂ (ISO 1133; 190°C; 2.16kg) of suitable ethylene based plastomers is in the range of 2.0 - 30 g/10 min, preferably in the range of 3.0 - 20 g/10 min and more preferably in the range of 5.0 - 15.0 g/min.

The melting points (measured with DSC according to ISO 11357-3:1999) of suitable ethylene based plastomers are below 130°C, preferably below 120°C, more preferably below 110°C and most preferably below 100°C.

Furthermore suitable ethylene based plastomers have a glass transition temperature Tg (measured with DMTA according to ISO 6721-7) of below -25°C, preferably below -30°C, more preferably below -35°C.
In case the copolymer is a copolymer of ethylene and propylene it has an ethylene content from 10 to 55 wt%, preferably from 15 to 50 wt% and more preferably from 18 to 48 wt%.

In case the copolymer is a copolymer of ethylene and a C4 - C10 alpha olefin it has an ethylene content from 60 to 95 wt%, preferably from 65 to 90 wt% and more preferably from 70 to 88 wt%.

The molecular mass distribution Mw/Mn of suitable ethylene based plastomers is most often below 4, such as 3.8 or below, but is at least 1.7. It is preferably between 3.5 and 1.8.

Suitable ethylene based plastomers can be any copolymer of ethylene and propylene or ethylene and C₄ - C₁₀ alpha olefin having the above defined properties, which are commercial available, i.a. from Borealis under the tradename Queo, from DOW Chemical Corp (USA) under the tradename Engage or Affinity, or from Mitsui under the tradename Tafmer.

Alternately these ethylene based plastomers can be prepared by known processes, in a one stage or two stage polymerization process, comprising solution polymerization, slurry polymerization, gas phase polymerization or combinations therefrom, in the presence of suitable catalysts, like vanadium oxide catalysts or single-site catalysts, e.g. metallocene or constrained geometry catalysts, known to the art skilled persons.

Preferably these ethylene based plastomers are prepared by a one stage or two stage solution polymerization process, especially by high temperature solution polymerization process at temperatures higher than 100°C.

Such process is essentially based on polymerizing the monomer and a suitable comonomer in a liquid hydrocarbon solvent in which the resulting polymer is soluble. The polymerization is carried out at a temperature above the melting point of the polymer, as a result of which a polymer solution is obtained. This solution is flashed in order to separate the polymer from the unreacted monomer and the solvent. The solvent is then recovered and recycled in the process.

Preferably the solution polymerization process is a high temperature solution polymerization process, using a polymerization temperature of higher than 100°C. Preferably the polymerization temperature is at least 110°, more preferably at least 150°C. The polymerization temperature can be up to 250°C.
The pressure in such a solution polymerization process is preferably in a range of 10 to 100 bar, preferably 15 to 100 bar and more preferably 20 to 100 bar.
The liquid hydrocarbon solvent used is preferably a C₅₋₁₂-hydrocarbon which may be unsubstituted or substituted by C₁₋₄ alkyl group such as pentane, methyl pentane, hexane, heptane, octane, cyclohexane, methylcyclohexane and hydrogenated naphtha. More preferably unsubstituted C6-10-hydrocarbon solvents are used.

A known solution technology suitable for the process according to the invention is the COMPACT technology.

The blend can be produced by any suitable melt mixing process at temperatures above the melting point of the respective blend. Typical devices for performing said melt mixing process are twin screw extruders, single screw extruders optionally combined with static mixers, chamber kneaders like Farrel kneaders, Banbury type mixers and reciprocating co-kneaders like Buss co-kneaders. Preferably, the melt mixing process is carried out in a twin screw extruder with high intensity mixing segments and preferably at a temperature of 170 to 270°C, more preferably of 180 to 250°C.
It is also possible to produce the blend of terpolymer and plastomer by dry-blending in a suitable mixing equipment, like horizontal and vertical agitated chambers, tumbling vessels, and Turbula mixers, as long as sufficient homogeneity is obtained.

### Three-layer structure

The three-layer structure in accordance with the present invention may be prepared by any conventional film extrusion procedure known in the art, e.g. with blown film extrusion. Preferably, the three-layer film is formed by blown film extrusion, more preferably by coextrusion processes, which in principle are known and available to the skilled person. Typical processes for preparing a three-layer structure in accordance with the present invention are extrusion processes through an angular die, followed by blowing into a tubular film by forming a bubble which is collapsed between the rollers after solidification. This film can then be slid, cut or converted, such as by using a gazette head, as desired. Conventional film production techniques may be used in this regard. Typically the core layer and the sandwiching layers are coextruded at a temperature in the range of from 160 to 240°C and cooled by blowing gas (generally air) at a temperature of 5 to 50°C, to provide a frost line height of 1 or 2 to 8 times the diameter of the dye. The blow up ratio can be in the range of from 1 (1:1) to 4 (1:4), preferably 1.5 (1:1.5) to 3.5 (1:3.5), more preferably from 2 (1:2) to 3 (1:3).

The film preparation process steps of the invention are known and may be carried out in one film line in a manner known in the art. Such film lines are commercially available, for example from Windmoller & Holscher, Reifenhauser, Hosokawa Alpine, etc.
Typically the three-layer structure (O/CO) is produced on a 3-layer coextrusion line, but in some embodiments it may be appreciated that the used coextruder is a 5 or 7 layer coextrusion line. In such a set up the central dies may all extrude C-layer material to form an O-1/C/C/C/O-2 or O-1/C/C/C/C/C/O-2 type film or each of the two, respectively three outer dies may extrude outer layer-layer material to form an O-1/O-1/C/O-2/O-2 or O-1/O-1/O-1/C/O-2/O-2/O-2 type film or as a combination of the before described possibilities an O-1/O-1/C/C/C/O-2/O-2 type film could be produced, too. As all these outer- respectively C-layers are identical, the films produced are effectively still O-1/C/O-2 films. Preferably 7-layer coextrusion lines would be used if desired, with O-1/C/C/C/C/C/O-2 being the preferred type of film structure.

### Blocked film structure

For the blocked film an O/C/B type structure is used, where O is one of the outer layers (O-1 or O-2), C is the core layer and layer B is the blocking layer. As the three layer coextruded film exits the die in the form of a bubble, the bubble is optionally cut and then two halves forced together to effectively form an O-1/C/B/B/C/O-2 type structure (i.e. the formed bubble is collapsed e.g. at the nip rolls to form said film). In this way, the film thickness is effectively doubled and the desired initial film thickness achieved. This is called film blocking in the art.
Thus, the O-1/C/B/B/C/O-2 film is formed from two identical O/C/B films laminated together via their (B) layers.
For the O-1/C/C/C/B/B/C/C/C/O-2 film two identical O/C/C/C/B films were produced on a 5-layer coextrusion line and the resulting bubble is collapsed to form the corresponding blocked film structure.
Preferably O-1/C/C/C/B/B/C/C/C/O-2 film structures are used, if the first film is a blocked film.

### MDO

The multilayer film is then uniaxially oriented in the machine (or processing) direction. During the MDO, the film from the blown-film line or other film process is heated to an orientation temperature. Preferably, the temperature range for orientation can be 25K below the VICAT A-level of the outer film layer material up to the melting temperature of the outer film layer material. The heating is preferably performed utilizing multiple heating rollers.
Next, the heated film is fed into a slow drawing roll with a nip roller, which has the same rolling speed as the heating rollers. The film then enters a fast drawing roll. The fast drawing roll has a speed that is 2 to 10 times faster than the slow draw roll, which effectively orients the film on a continuous basis.
The oriented film then enters annealing thermal rollers, which allow stress relaxation by holding the film at an elevated temperature for a period of time.
The annealing temperature is preferably within the same temperature range as used for stretching or slightly below (e.g. 10 to 20K below), with room temperature being the lower limit. Finally, the film is cooled through cooling rollers to an ambient temperature.

The ratio of the film thickness before and after orientation is called "drawdown ratio."

The drawdown ratio varies depending on many factors including the desired film thickness, film properties, and multilayer film structures.
Preferably, the draw-down ratio is such that the film is at or near maximum extension. Maximum extension is the draw-down film thickness at which the film cannot be drawn further without breaking. The film is said to be at maximum extension when machine direction (MD) tensile strength has a less than 100% elongation at break under ASTM D-882. The preparation process of a uniaxially oriented in MD multilayer film of the invention comprises at least the steps of forming a layered film structure and stretching the obtained multilayer film in the machine direction in a draw ratio of at least 1:4 up to 1:12, preferably 1:5 to 1:10 and more preferably 1:5.5 to 1:8.
The film is stretched at least 4 times up to 12 times, its original length in the machine direction. This is stated herein as a draw ratio of at least 1:4, i.e. "1" represents the original length of the film and "4" denotes that it has been stretched to 4 times that original length.

An effect of stretching (or drawing) is that the thickness of the film is similarly reduced. Thus a draw ratio of at least 1:4 preferably also means that the thickness of the film is at least four times less than the original thickness.

The films of the invention have an original thickness of 40 to 360 µm before stretching, preferably 50 to 300 µm and more preferably 55 to 240 µm.

After stretching, the final thickness of the uniaxially oriented films according to this invention is typically in the range 10 to 27 µm, preferably 15 to 25 µm and more preferably of 18 to 22 µm.

For the three-layer structure the outer layers and core layer may all be of equal thickness or alternatively the core layer may be thicker than each outer layer. A convenient film comprises two outer layers which each form 10 to 35%, preferably 15 to 30% of the total final thickness of the 3-layered film, the core layer forming the remaining thickness, e.g. 30 to 80%, preferably 40 to 70% of the total final thickness of the 3-layered film.
The total thickness of the film is 100%, thus the some of the individual layers has to be 100%.

For the blocked film structure O-1/C/C/C/B/B/C/C/C/O-2 the individual layers can contribute to the total film thickness of the first film like for example:
10 to 30%, preferably 15-25% for each of the outer layers (O-1 and O2)
5 to 30%, preferably 8 to 20% for each of the blocking layers (B) and
10 to 40%, preferably 15 to 35% for each of the core layers (C).

The two outer layers and the two blocking layers are preferably each of equal thickness.

The thickness of the 3 C-layers in the O-1/C/C/C/B part as well as in the /B/C/C/C/O-2 may be also be different or equal. The 3 C-layers C/C/C may for example contribute for both parts 10 to 20%/25 to 40%/10 to 20%, or the like.

The total thickness of the film is 100%, thus the sum of the thickness of the individual layers has to be 100%.

The MDO film, i.e. the first film according to the invention presents a polyethylene film which can be further down-gauged in comparison to known PE blown films (oriented or non-oriented) made of low density polyethylene as described in the state of the art, and simultaneously improving or at least maintaining tensile modulus and furthermore maintaining the balance between optical properties like gloss and transparency and mechanical properties.

The first film is characterize by the following properties
a) Tensile modulus (according to ISO 527-3) in machine direction measured on a 25 µm film of at least 1000 MPa and of at least 1200 MPa measured on a 20 µm film
b) Tensile modulus (according to ISO 527-3) in transverse direction measured on a 25 µm film of at least 1300 MPa and of at least 1400 MPa measured on a 20 µm film
c) relative tear resistance in machine direction [N/mm] according to Elmendorf method (ISO 6383-2) for a film thickness of 25 µm of at least 60 N/mm and of at least 45 N/mm measured on a 20 µm film
d) a relative tear resistance in transverse direction [N/mm] according to Elmendorf method (ISO 6383-2) for a film thickness of 25 µm of at least 100 N/mm and of at least 80 N/mm measured on a 20 µm film
e) gloss (20°) according to ASTM D2457 for a film thickness of 25 µm of at least 130% and for a film thickness of 20 µm of at least 110%
f) haze according to ASTM D1003 for a film thickness of 25 µm of at most 4.5% and for a film thickness of 20 µm of at most 5.5%

The first film according to the invention is then laminated to a second film.

The ability to use such thin films in the formation of laminates is an important aspect of the invention.
Therefore the present invention is furthermore related to the use of a first film as defined above, for producing laminated film structures, whereby the first film is uniaxial oriented in the machine direction (MD) and has a film thickness after orientation of 10 to 27 µm preferably 15 to 25 µm, more preferably of 18 to 22 µm.
Especially preferred are in this case films of a thickness around 20 µm (i.e. 18 to 22 µm). Such thin films being suitable in the formation of laminates have not yet been described.
As described above such thin films show improved tensile modulus, while keeping the balance of optical properties and mechanical properties.

### Ad second film:

The second film of the laminated film structure comprises at least one sealing layer.

### Sealing layer

The sealing layer b₁) comprises a blend of a metallocene produced linear low density polyethylene (mLLDPE) or an ethylene-based plastomer with a low density polyethylene (LDPE).

As used herein, the mLLDPE polymer is an ethylene copolymer having a density of 940 kg/m³ or less. Preferred mLLDPE's may have a density of 905 to940 kg/m³, more preferably 910 to 937 kg/m³. In one preferable embodiment even densities of 915 to 925 kg/m³ are highly feasible.
The mLLDPE is formed from ethylene along with at least one C₃-C₂₀-alpha-olefin comonomer, preferably C₃-C₁₂-alpha-olefin comonomer, e.g. 1-butene, 1-hexene or 1-octene. Preferably, the mLLDPE is a binary copolymer, i.e. the polymer contains ethylene and one comonomer, or a terpolymer, i.e. the polymer contains ethylene and two or three, preferably two, comonomers. Preferably, the mLLDPE comprises an ethylene-hexene copolymer, ethylene-octene copolymer, ethylene-butene copolymer or a terpolymer of ethylene with 1-butene and 1-hexene comonomers. The amount of comonomer present in the mLLDPE is preferably 0.5 to 12 mol%, more preferably 2 to 10 mol%, and most preferably 4 to 8 mol%.
Alternatively, comonomer contents present in the mLLDPE may be 1.5 to 10 wt%, especially 2 to 8 wt%.
The MFR₂ of mLLDPE's is preferably in the 0.01 to 20 g/10min, more preferably 0.2 to 10 g/10min, even more preferably 0.3 to 6.0 g/10min, and most preferably 0.4 to 4.0 g/10min.

The mLLDPE has preferably a weight average molecular weight (Mw) of 100 000 to 250 000 kg/mol, more preferably 110 000 to 160 000 kg/mol.

The mLLDPE may be unimodal or multimodal, both are preferable. By unimodal is meant that the molecular weight profile of the polymer comprises a single peak and is produced by one reactor and one catalyst.
The unimodal mLLDPE polymers preferably possess a narrow molecular weight distribution. The Mw/Mn value is preferably 2 to 4, more preferably 2 to 3.

Multimodal can be understood as bimodal MWD or bimodal comonomer distribution (e.g. the MFR's of the components are the same, but they contain same comonomer in different amounts). Bimodal mLLDPE comprise a LMW component and a HMW component.
Both the LMW and HMW components of multimodal mLLDPE are preferably copolymers of ethylene as defined above.
The molecular weight distribution, Mw/Mn, of a multimodal mLLDPE may be below 30, preferably in the range of 2 - 5.

Suitable mLLDPE's are available commercially from ExxonMobil Chemical, Nova, Dow, Basell, to mention a few.

Alternatively, suitable mLLDPE polymers can be produced in a known manner according to or analogously to conventional polymerization processes, including solution, slurry and gas phase processes, described in the literature of polymer chemistry.

Unimodal mLLDPE, as defined above is preferably prepared using a single stage polymerization, e.g. solution, slurry or gas phase polymerization, preferably a slurry polymerization in slurry tank or, more preferably, in loop reactor in a manner well known in the art. As an example, said unimodal mLLDPE can be produced e.g. in a single stage loop polymerization process according to the principles given below for the polymerization of low molecular weight fraction in a loop reactor of a multistage process, naturally with the exception that the process conditions (e.g. hydrogen and comonomer feed) are adjusted to provide the properties of the final unimodal polymer.
Multimodal (e.g. bimodal) mLLDPE as defined above can be made by blending mechanically two or more separately prepared polymer components, or preferably, by in situ blending in a multistage polymerization process during the preparation process of the polymer components. Both mechanical and in situ blending is well known in the field.

Accordingly, preferred multimodal mLLDPE polymers are obtainable by in-situ blending in a multistage, i.e. two or more stage, polymerization process including solution, slurry and gas phase process, in any order. Alternatively said multimodal mLLDPE may be obtainable by using two or more different polymerization catalysts, including multi- or dual site catalysts, in a one-stage polymerization.

Preferably the multimodal mLLDPE as defined above is produced in at least two-stage polymerization using the same catalyst, e.g. a single site catalyst. Thus, for example two slurry reactors or two gas phase reactors, or any combinations thereof, in any order can be employed.

mLLDPE as defined above may be made using any conventional single site catalysts (SSC), which SSC catalysts include metallocenes.
All these catalysts are well known in the field. In case of mLLDPE, metallocene catalysis is preferably used herein. The preparation of the metallocene catalyst can be carried out according or analogously to the methods known from the literature and is within skills of a person skilled in the field. Thus for the preparation see e.g. EP-A-129 368, WO-A-9856831, WO-A-0034341, EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130. WO2005/002744 describes a preferable catalyst and process for preparing said mLLDPE component.

Instead of an mLLDPE a plastomer as defined above for the first film (blocked structure) can be used.

LDPE means herein a low-density ethylene homopolymer produced in high-pressure polymerization process.
Such LDPEs are well known in the art and they typically contain long chain branching which differentiates LDPEs from linear low-density polyethylenes, LLDPEs.

LDPE usable in the sealing layer of present invention is in principal not limited.
LDPE may typically have a MFR₂ (190°C, 2.16kg; ISO 1133)of at least 0.05 g/10 min, preferably in the range 0.1-20 g/10 min, more preferably 0.3-10 g/10 min, still more preferably 0.4-5 g/10 min. In one embodiment, LDPE with MFR₂ of 0.2 to 1.0 g/10 min is preferred.
The density (ISO 1183) of the LDPE is typically 905-940 kg/m³, preferably 910 to 935 kg/m³, e.g. 915 to 930 kg/m³.
The Tm (DSC, ISO 11357-3) of the LDPE is preferably 70-180°C, more preferably 90-140°C, e.g. about 110-120°C.

LDPEs suitable for the second film structure are any conventional LDPEs, e.g. commercially known LDPEs, or they may be prepared according to any conventional high-pressure polymerization (HP) process in a tubular or autoclave reactor using a free radical formation. Such HP processes are very well known in the field of polymer chemistry and described in the literature, see e.g. Vieweg, Schely and Schwarz: Kunstoff Handbuch, Band IV, Polyolefins, Carl Hanser Verlag(1969), pages 39-51. Typical pressures are from 1000 to 3000 bar. The polymerization temperature is preferably 150-350°C. The free radical initiators are commonly known, e.g. organic peroxide based initiators.
Suitable LDPE's are available commercially from Borealis, Basell, Exxon, Sabic, or other suppliers.

The amount of LDPE present in the sealing layer is 5 wt% up to 50% wt, preferably 10 to 45 wt%, more preferably 20 to 40wt%.

Thus the amount of mLLDPE or plastomer usable in the sealing layer typically varies between 50 to 95 wt%, preferably 55 to 90wt% and more preferably between 60 to 80wt% of the total amount of the sealing layer.

In a further embodiment the second film comprises in addition to the sealing layer b₁) one further layer b₂) comprising a bimodal ethylene/1-butene/C₆-C₁₂-alpha-olefin terpolymer, with a density between 926 kg/m³ to 950 kg/m³ as described for the core layer (C) of the first film.

In a preferred film structure for the second film b₂) is present, thus forming a b₂/b₁ film structure.

In addition to the bimodal terpolymer this layer may also contain antioxidants, process stabilizers, pigments, UV-stabilizers and other additives known in the art.
Examples of stabilizers are hindered phenols, hindered amines, phosphates, phosphites and phosphonites.
Examples of pigments are carbon black, ultra marine blue and titanium dioxide. Examples of other additives are e. g. clay, talc, calcium carbonate, calcium stearate, zinc stearate and antistatic additives like.

The second film may comprise still some other further layers.
In one embodiment the second film comprises a second further film layer b₃) forming a 3-layer film structure of b₃/b₂/b₁.
The second further film layer b₃) is preferably made of the same LDPE as described for the sealing layer b₁)

The layers b₃ and b₁) may also contain other polymer components if necessary and may also contain minor amounts of conventional additives such as antioxidants, UV stabilisers, acid scavengers, nucleating agents, anti-blocking agents, slip agents etc., as well as polymer processing agent (PPA). Polymer processing agents are available from commercial suppliers such as Dynamar and may include a fluoroelastomer component and can be added to the as part of a masterbatch as is known in the art.

The 3-layer films (i.e. the second film) of the invention may have a thickness of 10 to 250 µm, preferably 20 to 200 µm, and more preferably 30 to 150 µm.

The layers b₁, b₂ and b₃ may all be of equal thickness or alternatively the layer b₂, forming the in this case the core layer, may be thicker than each of b₃ and b₁, forming outer layers.
A convenient 3-layer film comprises two outer layers (b₃ and b₁), which each form 10 to 35%, preferably 15 to 30% of the total thickness of the 3-layered film, the core layer (i.e. b₂) forming the remaining thickness, e.g. 30 to 80%, preferably 40 to 70% of the total thickness of the 3-layered film.

The total thickness of the film is 100%, thus the some of the individual layers has to be 100%.

In a further embodiment the second film can comprise the sealing layer b₁, as described above, the at least one further layer b₂, as described above and additionally 3 further layers b₄, b₅ and b₆, forming a film of the structure b₆/b₅/b₄/b₁/b₂.

In this case b₂, b₄ and b₅ are composed of a terpolymer, which may be the same terpolymer in all three layers. These three layers may alternatively be composed of different terpolymers or the middle layer of these three layers, in this case b₄, may be composed of one terpolymer and the two sandwiching layers, b₂ and b₅, may be composed of another terpolymer.
Suitable terpolymers are described above for the core layer of the first film.
In addition to the bimodal terpolymer these three layers may also contain antioxidants, process stabilizers, pigments, UV-stabilizers and other additives known in the art.
Examples of stabilizers are hindered phenols, hindered amines, phosphates, phosphites and phosphonites.
Examples of pigments are carbon black, ultra marine blue and titanium dioxide. Examples of other additives are e. g. clay, talc, calcium carbonate, calcium stearate, zinc stearate and antistatic additives like.

Layer b₆ is composed of a blend of terpolymer and a metallocene produced linear low density polyethylene (mLLDPE).
Suitable terpolymers are described above for the core layer of the first film.
Suitable mLLDPEs are described above for the sealing layer b₁ of the second film.
The amount of terpolymer in this layer is in the range of 40 to 80wt%, preferably 50 to 70wt% and more preferably 55 to 65wt%, thus the mLLDPE being present in an amount of 20 to 60wt%, preferably 30 to 50 wt% and more preferably 35 to 34wt%.

The 5-layer films of the invention may have a thickness of 30 to 250 µm, preferably 40 to 200 µm, and more preferably 50 to 120 microns.
The layers may all be of equal or different thickness.
For example the sealing layer b₁ and the layer b₆ may each contribute 5 to15%, preferably 8 to 12wt% of the total thickness and the layers b₅, b₄ and b₂ contribute the rest, whereby these three layers may be of equal thickness. The layers b₅, b₄ and b₂ can also have different thicknesses, like 10 to 25%/ 30 to 60%/10 to 25%, preferably 15 to 20%/40 to 50%/15 to 20%.

The total thickness of the film is 100%, thus the sum of the thickness of the individual layers has to be 100%.

The film structure for the second film in accordance with the present invention may be prepared by any conventional film extrusion procedure known in the art, e.g. with blown film extrusion. Preferably, the film is formed by blown film extrusion, more preferably by coextrusion processes, which in principle are known and available to the skilled person. Typical processes for preparing a film structure in accordance with the present invention are extrusion processes through an angular die, followed by blowing into a tubular film by forming a bubble which is collapsed between the rollers after solidification. This film can then be slid, cut or converted, such as by using a gazette head, as desired. Conventional film production techniques may be used in this regard. Typically the layers are coextruded at a temperature in the range of from 160 to 240°C and cooled by blowing gas (generally air) at a temperature of 5 to 50°C, to provide a frost line height of 1 or 2 to 8 times the diameter of the dye. The blow up ratio can be in the range of from 1 (1:1) to 4 (1:4), preferably 1.5 (1:1.5) to 3.5 (1:3.5), more preferably from 2 (1:2) to 3 (1:3).

### Ad laminated structure

The laminated film structure comprising the first film and the second film is obtained by laminating the first film to the sealing layer of the second film.
The lamination step of the first film and the second film may be effected in any conventional lamination device using conventional lamination methods, such as adhesive lamination including both solvent based and "solvent less" adhesive lamination using any conventional, e.g. commercially available, adhesive, or sandwich lamination with or without a melt web which can be pressed between the substrates. Such melt web can be any conventional melt web material based on polyethylene, such as LDPE. Solvent based and solvent less lamination methods are well known and well described in various literatures.

The laminated structure according to the present invention is highly suitable for preparing stand up pouches.

The laminated film structure of the present invention has many advantageous. As it is a "100% PE" solution with no other polymer than ethylene based polymers being present, the laminated film structure is fully recyclable and thus improves sustainability. Furthermore, due to the fact that the MDO film used according to the invention can be further down gauged than known solutions, less material is needed to prepare the laminated film structure and thus saves costs and material, without destroying other properties.

### Experimental part:

### Measuring methods

The following definitions of terms and determination methods apply for the above general description of the invention as well as to the below examples unless otherwise defined.

### Melt Flow Rate (MFR)

The melt flow rates are measured at 190 °C with a load of 2.16 kg (MFR₂), respectively with a load of 5.0 kg (MFR₅) according to ISO 1133

### Density

The density was measured according to ISO 1183 and ISO1872-2 for sample preparation.

**Tensile modulus** Film TD (transversal direction) and MD (machine direction)
Tensile moduli in machine and transverse direction were determined acc. to ISO 527-3 on films with a thickness of 25 µm respectively 20 µm at a cross head speed of 1 mm/min for the first film (MDO film).

**Gloss** and **haze** as measures for the optical appearance of the films were determined according to ASTM D2457 (gloss; (measured outside, lengthwise, measuring angel 20°)) and ASTM D1003 (haze), on first film samples with a thickness of 25 µm respectively 20 µm.

**Tear resistance (determined as Elmendorf tear (N)):** Applies for the measurement both in machine direction and in transverse direction. The tear strength is measured using the ISO 6383/2 method. The force required to propagate tearing across a film sample is measured using a pendulum device. The pendulum swings under gravity through an arc, tearing the specimen from pre-cut slit. The specimen is fixed on one side by the pendulum and on the other side by a stationary clamp. The tear resistance is the force required to tear the specimen. The relative tear resistance (N/mm) is then calculated by dividing the tear resistance by the thickness of the film.

### Materials used:

**ALCUDIA® R4806HT:** unimodal Ziegler Natta produced high density polyethylene (HDPE) grade (provided by Repsol); MFR₂ of 0.65 g/10 min and density of 948 kg/m³
**FX1001:** bimodal Ziegler Natta produced terpolymer (C2/C4/C6) Grade BorShape™ (provided by Borealis AG). FX1001 has MFR₅ of 0.85 g/10 min, density of 931 kg/m³.
**FX1002:** bimodal Ziegler Natta produced terpolymer (C2/C4/C6) Grade BorShape™ (provided by Borealis AG). FX1002 has MFR₅ of 2.0 g/10 min, density of 937 kg/m³.
**FT5236:** tubular LDPE (provided by Borealis AG) with MFR₂ (190°C/2.16 kg) of 0.75 g/10 min and density of 924 kg/m³; includes antiblock agent (synthetic silica), slip agent (Erucamide) and antioxidant
**OPE795:** bimodal Ziegler Natta produced linear low density polyethylene (C2/C4) Grade BorLite™ (provided by Borealis AG). OPE795 has MFR₅ of 0.85 g/10 min, density of 931 kg/m³.
**Queo 8201:** Queo™ 8201 is a unimodal ethylene based octene plastomer (provided by Borealis AG), with MFR₂ (190/2.16) of 1.1 g/10 min and density of 0.882 g/cm³, produced in a solution polymerization process using a metallocene catalyst.
**Queo 0201FX:** Queo™ 0201FX is a unimodal ethylene based octene plastomer (provided by Borealis AG), with MFR₂ (190/2.16) of 1.1 g/10 min and density of 0.902 g/cm³, produced in a solution polymerization process using a metallocene catalyst. It contains 3000ppm anti block agent, 1200 ppm slip agent, processing aid and stabilisers
**Exceed**™ **1018CA:** mLLDPE, ethylene-hexene copolymer from ExxonMobil Chemical with MFR2 (190°C/2.16 kg) of 1.0 g/10 min and density of 918 kg/m3

### EXAMPLES:

The following film structures have been prepared:

### Inventive Example 1 (IE1) + Inventive Example 2 (IE2)

### First film

Outer layer O-1: HDPE grade R4806HT (25% thickness)
Core layer C: terpolymer FX1001 (50% thickness)
Outer layer O-2: HDPE grade R4806HT (25% thickness)

### Inventive Example 3 (IE3):

### First film

Outer layer O-1: HDPE grade R4806HT (25% thickness)
Core layer C: terpolymer FX1002 (50% thickness)
Outer layer O-2: HDPE grade R4806HT (25% thickness)

### Inventive Example 4 (IE4)

*First film: blocked film structure* O-1/C₁/C₂/C₃/B₁/B₁/C₃/C₂/C₁/O-2
Outer layers O-1 and O-2: HDPE grade R4806HT (20% thickness)
C₁: terpolymer FX1001 (17.5% thickness)
C₂: terpolymer FX1001 (30% thickness)
C₃: terpolymer FX1001 (17.5% thickness)
B₁: terpolymer 80wt% FX1001 + 20wt% Queo 8201 (15% thickness)

### As second film the following two structures were used:

Second film - Variant A: 3-layer structure b₃/b₂/b1₂
Layer b₃: FT5236 (25%thickness)
Layer b₂: FX1001 (50% thickness)
Sealing layer b₁: blend of 80wt% of Exceed™ 1018CA and 20 wt% of FT5236 (25% thickness)

Second film - Variant B: 5-layer structure b₆/b₅/b₄/b₂/b₁
Layer b₆: blend of 60wt% FX1001 and 40wt% Exceed™ 1018CA (10%thickness)
Layer b₅: FX1002 (17.5% thickness)
Layer b₄: FX1001 (45% thickness)
Layer b₂: FX1002 (17.5% thickness)
Sealing layer b₁: blend of 70wt% of Queo 0201FX and 30 wt% of FT5236 (10%thickness)

### Comparative Example 1 (CE1)

### First film

Outer layer O-1: HDPE grade R4806HT (25% thickness)
Core layer C: terpolymer OPE795 (50% thickness)
Outer layer O-2: HDPE grade R4806HT (25% thickness)

### Comparative Example 2 (CE2)

### First film

*blocked film structure* O-1/C₁/C₂/C₃/B₁/B₁/C₃/C₂/C₁/O-2
Outer layers O-1 and O-2: HDPE grade R4806HT (20% thickness)
C₁: terpolymer OPE795 (17% thickness)
C₂: terpolymer OPE795 (31% thickness)
C₃: terpolymer OPE795 (17% thickness)
B₁: terpolymer 80wt% OPE795 + 20wt% Queo 8201 (15% thickness)

### Film Preparation

First film of IE1, IE2, IE3 and CE1 was coextruded on a 7-layer Alpine coextrusion line with die diameter 300 mm, at a blow up ratio (BUR) of 1:3, frost line height 3D and Die gap 1.5 mm.

Outer layer O-1 was extruded from extruder A and B

The core layer C was extruded from extruder C, D and E

Outer layer O-2 was extruded from extruder F and G

The temperature settings on all extruders were A=230°C / B=230°C / C=260°C / D= 260°C/ E=240°C /F=220°C/ G=230°C and the temperature setting on the extruder die was 230°C.

The formed films (O-1/O-1/C/C/C/O-2/O-2 = O-1/C/O-2) had a thickness of 120 µm respectively 150 µm. (and 180 µm for CE1)

First film of IE4 and CE2 was coextruded on a 5-layer Alpine coextrusion line.

The temperature settings on all extruders were A=230°C / B=260°C / C=260°C / D= 260°C/ E=220°C and the temperature setting on the extruder die was 230°C.

The formed films had a thickness of 125 µm (blocked film 2 x 62.5 µm).

Stretching was carried out using a monodirectional stretching machine manufactured by Hosokawa Alpine AG in Augsburg/Germany. The unit consists of preheating, drawing, annealing, and cooling sections, with each set at specific temperatures to optimize the performance of the unit and produce films with the desired properties. The heating was at 105 °C, the stretching was done at 115 °C, annealing and cooling was done at 110 ° down to 40 °C.

The film obtained from blown film extrusion was pulled into the orientation machine then stretched between two sets of nip rollers where the second pair runs at higher speed than the first pair resulting in the desired draw ratio. Stretching is carried out with the respective draw ratios to reach the desired thickness. (draw ratios and final thickness of MDO films are given in Table 1) After exiting the stretching machine the film is fed into a conventional film winder where the film is slit to its desired width and wound to form reels.

The properties of the MDO films are also given in Table 1:

**Table 1:**

| Exa mples | | | IE1 | IE2 | IE3 | CE1 | CE2 |
|---|---|---|---|---|---|---|---|
| Primary film thickness [µm] | | | 150 | 120 | 120 | 180 | 125 |
| Draw ratio | | | 1:6 | 1:6 | 1:6 | 1:6 | 1:5 |
| Final film thickness [µm] | | | 25 | 20 | 20 | 30 | 25 |

| | Parameter | unit | | | | | |
|---|---|---|---|---|---|---|---|
| Tensile test MD | Tensile modulus | MPa | 1191 | 1322 | 1459 | 838 | 860 |
| Tensile test TD | Tensile modulus | MPa | 1417 | 1483 | 1560 | 1207 | 1110 |
| Elmendorf MD | RELATIVE TEAR RESISTANCE | N/mm | 63 | 113 | 49 | 72 | 68 |
| Elmendorf TD | RELATIVE TEAR RESISTANCE | N/mm | 104 | 95 | 85 | 88 | 123 |
| Optics | Gloss (20°) | % | 136 | 117.2 | 120.8 | 131 | 136 |
| | Haze | % | 3.9 | 4.81 | 5.34 | 3.4 | 4.0 |

As can be seen from Table 1 the MDO films prepared according to the invention show improved down-gauging potential whilst increasing the tensile modulus and simultaneously keeping Elmendorf and optics at a comparable level.

## Claims

1. Laminated film structure comprising one first film being laminated to one second film and whereby the laminated film structures are based on polyethylene only, whereby
a) the first film comprises at least one core layer (C) and two outer layers (O-1, O-2) sandwiching the core layer, wherein
a₁) the core layer (C) comprises a bimodal ethylene/1-butene/C₆-C₁₂-alpha-olefin terpolymer, with a density between 926 kg/m³ to 950 kg/m³ and
a₂) the two outer layers comprising unimodal HDPE with a density of more than 940 kg/m³ up to 970 kg/m³,
the first film being uniaxial oriented in the machine direction (MD) in a draw ratio of 1:4 to 1:12.and having a film thickness after orientation of 10 to 27 µm and
b) the second film comprises at least one sealing layer, wherein
b₁) the sealing layer comprises a blend of a metallocene produced linear low density polyethylene (mLLDPE) or an ethylene-based plastomer with a low density polyethylene (LDPE),
the second film having a film thickness of 50 to 100 µm,
wherein in the laminated film structures other polymers than ethylene based polymers are substantially absent.

2. Laminated film structure according to claim 1, wherein the bimodal ethylene/1-butene/C₆-C₁₂-alpha-olefin terpolymer of the core layer (C) of the first film comprises
(A-1) a low molecular weight homopolymer of ethylene and
(A-2) a high molecular weight terpolymer of ethylene, 1-butene and a C₆-C₁₂-alpha-olefin,
wherein the C₆-C₁₂-alpha-olefin is selected from the group of 1-hexene, 4-methyl-1-pentene, 1-octene and 1-decene.

3. Laminated film structure according to claim 2, wherein the bimodal ethylene/1-butene/C₆-C₁₂-alpha-olefin terpolymer of the core layer (C) of the first film has a melt flow rate MFR₂ according to ISO 1133 (190°C, 2.16kg) of 0.01 to 6 g/10min, a melt flow rate MFR₅ according to ISO 1133 (190°C, 5kg) of 0.1 to 20 g/10min, a density according to ISO 1183, (method A) of 926 to 950 kg/m3, and an overall comonomer content of 0.3 to 7 % by mol, whereby
the lower molecular weight component of the bimodal terpolymer has a melt index MFR₂ according to ISO 1133 (190°C; 2.16kg) of 50 to 3 200 g/10min, a density according to ISO 1183, (method A) of 930 to 980 kg/m3, and the amount of the lower molecular weight component in the bimodal terpolymer is in the range of 30 to 70 wt%.

4. Laminated film structure according to any of the preceding claims 1 to 3, wherein the unimodal high density polyethylene of the two outer layers of the first film has a MFR₂ according to ISO 1133 (190°C; 2.16kg)) of 0.05 to 10 g/10 min, a density according to ISO 1183, (method A) of 941-970 kg/m³ and an MWD between 2 to 20.

5. Laminated film structure according to any of the preceding claims 1 to 4, wherein the first film is an unblocked film having the structure O-1/C/O-2, or has a blocked film structure O-1/C₁/B₁/B₁/C₁/O-2 or O-1/C₁/C₂/C₃/B₁/B₁/C₃/C₂/C₁/O-2, wherein O-1 and O-2 corresponds to the two outer layers, C corresponds to the core layer (C) and B is the blocking layer being composed of a blend of a terpolymer as used in core layer (C) and a plastomer.

6. Laminated film structure according to claim 5, wherein the plastomer is an ethylene based plastomers, being a copolymer of ethylene and propylene or a C₄ - C₁₀ alpha olefin with a density in the range of 0.860 - 0.915 g/cm³, an MFR₂ (ISO 1133; 190°C; 2.16kg) of in the range of 2.0 - 30 g/10 min, a melting point (measured with DSC according to ISO 11357-3:1999) of below 130°C, a glass transition temperature Tg (measured with DMTA according to ISO 6721-7) of below -25°C and a molecular mass distribution Mw/Mn of below 4.

7. Laminated film structure according to anyone of the preceding claims, wherein the first film has an original thickness of 40 to 360 µm before stretching and a final thickness of the uniaxially oriented films in the range of 10 to 27 µm.

8. Laminated film structure according to claim 7, wherein the final thickness of the uniaxially oriented films is in the range of 18 to 22 µm.

9. Laminated film structure according to anyone of the preceding claims, wherein the first film has the following properties
a) Tensile modulus (according to ISO 527-3) in machine direction measured on a 25 µm film of at least 1000 MPa and of at least 1200 MPa measured on a 20 µm film
b) Tensile modulus (according to ISO 527-3) in transverse direction measured on a 25 µm film of at least 1300 MPa and of at least 1400 MPa measured on a 20 µm film
c) relative tear resistance in machine direction [N/mm] according to Elmendorf method (ISO 6383-2) for a film thickness of 25 µm of at least 60 N/mm and of at least 45 N/mm measured on a 20 µm film
d) a relative tear resistance in transverse direction [N/mm] according to Elmendorf method (ISO 6383-2) for a film thickness of 25 µm of at least 100 N/mm and of at least 80 N/mm measured on a 20 µm film
e) gloss (20°) according to ASTM D2457 for a film thickness of 25 µm of at least 130% and for a film thickness of 20 µm of at least 110%
f) haze according to ASTM D1003 for a film thickness of 25 µm of at most 4.5% and for a film thickness of 20 µm of at most 5.5%

10. Laminated film structure according to anyone of the preceding claims, wherein in the sealing layer b₁) of the second film the metallocene produced linear low density polyethylene can be unimodal or multimodal, whereby the metallocene produced linear low density polyethylene is an ethylene/C3-C20-alpha-olefin copolymer having a density ISO 1183, (method A) of 905 to 940 kg/m3, preferably 910 to 937 kg/m3 an MFR2 according to ISO 1133 (190°C) in the range of 0.01 to 20 g/10min, preferably 0.2 30 to 10 g/10min, more preferably 0.3 to 6.0 g/10min, and most preferably 0.4 to 4.0 g/10min.

11. Laminated film structure according to anyone of the preceding claims, wherein the second film further comprises a layer b₂) comprising a bimodal ethylene/1-butene/C6-C12-alpha-olefin terpolymer, with a density between 926 kg/m³ to 950 kg/m³ as ddefined for the core layer (C) of the first film.

12. Laminated film structure according to claim 11, wherein the second film further comprises a second further film layer b₃) forming a 3-layer film structure of b₃/b₂/b₁, whereby the second further film layer b₃) is made of the same LDPE as used for the sealing layer b₁)

13. Laminated film structure according to claim 11, wherein the second film comprises the sealing layer b₁, the at least one further layer b₂, and additionally 3 further layers b₄, b₅ and b₆, forming a film of the structure b₆/b₅/b₄/b₁/b₂, wherein b₂, b₄ and b₅ are composed of a terpolymer as defined for the core layer (C) of the first film and layer b₆ is composed of a blend of terpolymer as defined for the core layer (C) of the first film and a metallocene produced linear low density polyethylene (mLLDPE) as defined for the sealing layer b₁ of the second film.

14. Use of the first film as defined in claim 1 for producing laminated film structures, whereby the first film is uniaxial oriented in the machine direction (MD) and has a film thickness after orientation of 10 to 27 µm.

15. Use of the first film according to claim 14 for producing laminated film structures, whereby the first film is uniaxial oriented in the machine direction (MD) and has a film thickness after orientation of 18 to 22 µm.

## Patentansprüche

1. Laminierte Folienstruktur, umfassend eine erste Folie, die auf eine zweite Folie laminiert ist, und wobei die laminierten Folienstrukturen nur auf Polyethylen basieren, wobei
a) die erste Folie mindestens eine Kernschicht (C) und zwei äußere Schichten (O-1, O-2) umfasst, die die Kernschicht zwischen sich einlagern, wobei
a₁) die Kernschicht (C) ein bimodales Ethylen/1-Buten/C₆-C₁₂-alpha-Olefinterpolymer mit einer Dichte zwischen 926 kg/m³ bis 950 kg/m³ umfasst und
a₂) die zwei äußeren Schichten unimodales HDPE mit einer Dichte von mehr als 940 kg/m³ bis zu 970 kg/m³ umfassen,
wobei die erste Folie uniaxial in der Maschinenrichtung (MD) mit einem Zugverhältnis von 1:4 bis 1:12 orientiert ist und nach dem Orientieren eine Foliendicke von 10 bis 27 µm aufweist, und
b) die zweite Folie mindestens eine Dichtungsschicht umfasst, wobei
b₁) die Dichtungsschicht eine Mischung aus einem metallocenhergestellten linearen Polyethylen mit geringer Dichte (mLLDPE) oder einem ethylenbasierten Thermoplast mit einem Polyethylen mit geringer Dichte (LDPE) umfasst,
wobei die zweite Folie eine Foliendicke von 50 bis 100 µm aufweist,
wobei in den laminierten Folienstrukturen andere Polymere als ethylenbasierte Polymere im Wesentlichen fehlen.

2. Laminierte Folienstruktur nach Anspruch 1, wobei das bimodale Ethylen/1-Buten/C₆-C₁₂-alpha-Olefinterpolymer der Kernschicht (C) der ersten Folie das Folgende umfasst:
(A-1) ein Homopolymer von Ethylen mit geringem Molekulargewicht und
(A-2) ein Terpolymer mit hohem Molekulargewicht von Ethylen, 1-Buten und einem C₆-C₁₂-alpha-Olefin,
wobei das C₆-C₁₂-alpha-Olefin aus der Gruppe ausgewählt ist, bestehend aus 1-Hexen, 4-Methyl-1-penten, 1-Okten und 1-Deken.

3. Laminierte Folienstruktur nach Anspruch 2, wobei das bimodale Ethylen/1-Buten/C₆-C₁₂-alpha-Olefinterpolymer der Kernschicht (C) der ersten Folie einen Schmelzflussindex MFR₂ gemäß ISO 1133 (190 °C, 216 kg) von 0,01 bis 6 g/10 min, einen Schmelzschlussindex MFR₅ gemäß ISO 1133 (190 °C, 5 kg) von 0,1 bis 20 g/10 min, eine Dichte gemäß ISO 1183 (Methode A) von 926 bis 950 kg/m³ und einen Gesamtcomonomergehalt von 0,3 bis 7 Mol% aufweist, wobei
die Komponente mit geringerem Molekulargewicht des bimodalen Terpolymers einen Schmelzflussindex MFR₂ gemäß ISO 1133 (190 °C; 216 kg) von 50 bis 3 200 g/10 min und eine Dichte gemäß ISO 1183 (Methode A) von 930 bis 980 kg/m³ aufweist und wobei die Menge der Komponente mit geringerem Molekulargewicht in dem bimodalen Terpolymer in dem Bereich von 30 bis 70 Gew.-% liegt.

4. Laminierte Folienstruktur nach einem der vorhergehenden Ansprüche 1 bis 3, wobei das unimodale Polyethylen mit hoher Dichte der zwei äußeren Schichten der ersten Folie einen MFR₂ gemäß ISO 1133 (190 °C; 2,16 kg) von 0,05 bis 10 g/10 min, eine Dichte gemäß ISO 1183 (Methode A) von 941-970 kg/m³ und eine MWD zwischen 2 bis 20 aufweist.

5. Laminierte Folienstruktur nach einem der vorhergehenden Ansprüche 1 bis 4, wobei die erste Folie eine unblockierte Folie ist, die eine Struktur O-1/C/O-2 aufweist, oder eine blockierte Folienstruktur O-1/C₁/B₁/B₁/C₁/O-2 oder O-1/C₁/C₂/C₃/B₁/B₁/C₃/C₂/C₁/O-2 aufweist, wobei O-1 und O-2 den zwei äußeren Schichten entsprechen, C der Kernschicht (C) entspricht und B die Blockierschicht ist, die aus einer Mischung aus einem Terpolymer, wie es in der Kernschicht (C) verwendet wird, und einem Thermoplasten ist.

6. Laminierte Folienstruktur nach Anspruch 5, wobei der Thermoplast ein ethylenbasierter Thermoplast ist, der ein Copolymer von Ethylen und Propylen oder einem C₄ - C₁₀ alpha-Olefin mit einer Dichte in dem Bereich von 0,860 - 0,915 g/cm³, einem MFR₂ (ISO 1133; 190 °C; 2,16 kg) in dem Bereich von 2,0 - 30 g/10 min, einem Schmelzpunkt (gemessen mittels DSC gemäß ISO 11357-3:1999) von unter 130 °C, einer Glasübergangstemperatur Tg (gemessen mittel DMTA gemäß ISO 6721-7) von unter -25 °C und einer Molekularmassenverteilung Mw/Mn von unter 4 ist.

7. Laminierte Folienstruktur nach einem der vorhergehenden Ansprüche, wobei die erste Folie eine ursprüngliche Dicke vor dem Verstrecken von 40 bis 360 µm aufweist und eine endgültige Dicke der uniaxial orientierten Folien in dem Bereich von 10 bis 27 µm liegt.

8. Laminierte Folienstruktur nach Anspruch 7, wobei die endgültige Dicke der uniaxial orientierten Folien in dem Bereich von 18 bis 22 µm liegt.

9. Laminierte Folienstruktur nach einem der vorhergehenden Ansprüche, wobei die erste Folie die folgenden Eigenschaften aufweist:
a) einen Zugmodul (gemäß ISO 527-3) in der Maschinenrichtung, gemessen an einer 25 µm Folie, von mindestens 1000 MPa und, gemessen an einer 20 µm Folie, von mindestens 1200 MPa
b) einen Zugmodul (gemäß ISO 527-3) in der Querrichtung, gemessen an einer 25 µm Folie, von mindestens 1300 MPa und, gemessen an einer 20 µm Folie, von mindestens 1400 MPa
c) eine relative Reißfestigkeit in der Maschinenrichtung [N/mm] gemäß dem Elmendorf-Verfahren (ISO 6383-2) für eine Foliendicke von 25 µm von mindestens 60 N/mm und von mindestens 45 N/mm, gemessen an einer 20 µm Folie
d) eine relative Reißfestigkeit in der Querrichtung [N/mm] gemäß dem Elmendorf-Verfahren (ISO 6383-2) für eine Foliendicke von 25 µm von mindestens 100 N/mm und von mindestens 80 N/mm, gemessen an einer 20 µm Folie
e) einen Glanz (20°) gemäß ASTM D2457 für eine Foliendicke von 25 µm von mindestens 130 % und für eine Foliendicke von 20 µm von mindestens 110 %
f) eine Trübung gemäß ASTM D1003 für eine Foliendicke von 25 µm von höchstens 4,5 % und für eine Foliendicke von 20 µm von höchstens 5,5 %.

10. Laminierte Folienstruktur nach einem der vorhergehenden Ansprüche, wobei in der Dichtungsschicht b₁) der zweiten Folie das metallocenhergestellte lineare Polyethylen mit geringer Dichte unimodal oder multimodal sein kann, wobei das metallocenhergestellte lineare Polyethylen mit geringer Dichte ein Ethylen/C3-C20-alpha-Olefincopolymer ist, das eine Dichte gemäß ISO 1183 (Methode A) von 905 bis 940 kg/m³, vorzugsweise 910 bis 937 kg/m³ und einen MFR₂ gemäß ISO 1133 (190 °C) in dem Bereich von 0,01 bis 20 g/10 min, vorzugsweise 0,2 30 bis 10 g/10 min, besonders vorzugsweise 0,3 bis 6,0 g/10 min und am meisten bevorzugt 0,4 bis 4,0 g/10 min aufweist.

11. Laminierte Folienstruktur nach einem der vorhergehenden Ansprüche, wobei die zweite Folie ferner eine Schicht b₂), die ein bimodales Ethylen/1-Buten/C6-C12-alpha-Olefinterpolymer mit einer Dichte zwischen 926 kg/m³ bis 950 kg/m³ umfasst, wie für die Kernschicht (C) der ersten Folie definiert, umfasst.

12. Laminierte Folienstruktur nach Anspruch 11, wobei die zweite Folie ferner eine zweite weitere Folienschicht b₃) umfasst, die eine 3-Lagenfolienstruktur mit b₃/b₂/b₁ bildet, wobei die zweite weitere Folienschicht b₃) aus dem gleichen LDPE hergestellt ist, wie es für die Dichtungsschicht b₁) verwendet wird.

13. Laminierte Folienstruktur nach Anspruch 11, wobei die zweite Folie, die die Dichtungsschicht b₁) umfasst, die mindestens eine weitere Schicht b₂ und zusätzliche 3 weitere Schichten b₄, b₅ und b₆ eine Folie mit der Struktur b₆/b₅/b₄/b₁/b₂ bilden, wobei b₂, b₄ und b₅ aus einem Terpolymer, wie es für die Kernschicht (C) der ersten Folie definiert ist, und die Schicht b₆ aus einer Mischung von dem Terpolymer, wie es für die Kernschicht (C) der ersten Folie definiert ist, und einem metallocenhergestellten linearen Polyethylen mit geringer Dichte (mLLDPE), wie es für die Dichtungsschicht b₁ der zweiten Folie definiert ist, zusammengesetzt ist.

14. Verwendung von der ersten Folie nach Anspruch 1 zum Herstellen von laminierten Folienstrukturen, wobei die erste Folie uniaxial in Maschinenrichtung (MD) orientiert ist und nach der Orientierung eine Foliendicke von 10 bis 27 µm aufweist.

15. Verwendung von der ersten Folie nach Anspruch 14 zum Herstellen von laminierten Folienstrukturen, wobei die erste Folie uniaxial in Maschinenrichtung (MD) orientiert ist und nach der Orientierung eine Foliendicke von 18 bis 22 µm aufweist.

## Revendications

1. Structure de films stratifiés comprenant un premier film stratifié sur un second film et selon laquelle les structures de films stratifiés sont uniquement à base de polyéthylène, selon laquelle
a) le premier film comprend au moins une couche centrale (C) et deux couches externes (O-1, O-2) prenant en sandwich la couche centrale, dans laquelle
a₁) la couche centrale (C) comprend un terpolymère bimodal d'éthylène/1-butène/alpha-oléfine en C₆ à C₁₂, ayant une masse volumique située entre 926 kg/m³ et 950 kg/m³ et
a₂) les deux couches externes comprenant un HDPE unimodal ayant une masse volumique de plus de 940 kg/m³ jusqu'à 970 kg/m³,
le premier film étant orienté de manière uniaxiale dans le sens machine (MD) dans un rapport d'étirage de 1:4 à 1:12 et ayant une épaisseur de film après orientation de 10 à 27 µm et
b) le second film comprend au moins une couche d'étanchéité, dans laquelle
b₁) la couche d'étanchéité comprend un mélange d'un polyéthylène linéaire basse densité produit par métallocène (mLLDPE) ou d'un plastomère à base d'éthylène avec un polyéthylène basse densité (LDPE),
le second film ayant une épaisseur de film de 50 à 100 µm,
dans laquelle dans les structures de films stratifiés, d'autres polymères que des polymères à base d'éthylène sont sensiblement absents.

2. Structure de films stratifiés selon la revendication 1, dans laquelle le terpolymère bimodal d'éthylène/1-butène/alpha-oléfine en C₆ à C₁₂ de la couche centrale (C) du premier film comprend
(A-1) un homopolymère d'éthylène de poids moléculaire bas et
(A-2) un terpolymère d'éthylène, de 1-butène et d'une alpha-oléfine en C₆ à C₁₂ de poids moléculaire élevé, dans laquelle l'alpha-oléfine en C₆ à C₁₂ est sélectionnée dans le groupe du 1-hexène, du 4-méthyl-1-pentène, du 1-octène et du 1-décène.

3. Structure de films stratifiés selon la revendication 2, dans laquelle le terpolymère bimodal d'éthylène/1-butène/alpha-oléfine en C₆ à C₁₂ de la couche centrale (C) du premier film présente un indice de fluidité à l'état fondu MFR₂ selon l'ISO 1133 (190 °C, 2,16 kg) de 0,01 à 6 g/10 min, un indice de fluidité à l'état fondu MFR₅ selon l'ISO 1133 (190 °C, 5 kg) de 0,1 à 20 g/10 min, une masse volumique selon l'ISO 1183 (procédé A) de 926 à 950 kg/m3, et une teneur globale en comonomère de 0,3 à 7 % en mole, selon laquelle
le composant de poids moléculaire plus bas du terpolymère bimodal présente un indice de fluidité à l'état fondu MFR₂ selon l'ISO 1133 (190 °C ; 2,16 kg) de 50 à 3200 g/10 min, une masse volumique selon l'ISO 1183, (procédé A) de 930 à 980 kg/m3, et la quantité du composant de poids moléculaire plus bas du terpolymère bimodal est située dans la plage allant de 30 à 70 % en poids.

4. Structure de films stratifiés selon l'une quelconque des revendications 1 à 3 précédentes, dans laquelle le polyéthylène haute densité unimodal des deux couches externes du premier film présente un MFR₂ selon l'ISO 1133 (190 °C ; 2,16 kg) de 0,05 à 10 g/10 min, une masse volumique selon l'ISO 1183, (procédé A) de 941 à 970 kg/m3 et une MWD entre 2 et 20.

5. Structure de films stratifiés selon l'une quelconque des revendications 1 à 4 précédentes, dans laquelle le premier film est un film non bloqué ayant la structure O-1/C/O-2, ou a une structure de film bloqué O-1/C₁/B₁/B₁/C₁/O-2 ou O-1/C₁/C₂/C₃/B₁/B₁/C₃/C₂/C₁/O-2, dans laquelle O-1 et O-2 correspondent aux deux couches externes, C correspond la couche centrale (C) et B est la couche de blocage composée d'un mélange d'un terpolymère tel qu'utilisé dans la couche centrale (C) et d'un plastomère.

6. Structure de films stratifiés selon la revendication 5, dans laquelle le plastomère est un plastomère à base d'éthylène, qui est un copolymère d'éthylène et de propylène ou d'une alpha-oléfine en C₄ à C₁₀ ayant une masse volumique située dans la plage allant de 0,860 à 0,915 g/cm³, un MFR₂ (ISO 1133 ; 190 °C ; 2,16 kg) situé dans la plage allant de 2,0 à 30 g/10 min, un point de fusion (mesuré par DSC selon l'ISO 11357-3:1999) de moins de 130 °C, une température de transition vitreuse Tg (mesurée par DMTA selon l'ISO 6721-7) de moins de -25 °C et une répartition de masse moléculaire Mw/Mn de moins de 4.

7. Structure de films stratifiés selon l'une quelconque des revendications précédentes, dans laquelle le premier film présente une épaisseur d'origine de 40 à 360 µm avant étirage et une épaisseur finale des films orientés de manière uniaxiale située dans la plage allant de 10 à 27 µm.

8. Structure de films stratifiés selon la revendication 7, dans laquelle l'épaisseur finale des films orientés de manière uniaxiale est située dans la plage allant de 18 à 22 µm.

9. Structure de films stratifiés selon l'une quelconque des revendications précédentes, dans laquelle le premier film présente les propriétés suivantes
a) un module en traction (selon l'ISO 527-3) dans le sens machine mesuré sur un film de 25 µm d'au moins 1000 MPa et d'au moins 1200 MPa mesuré sur un film de 20 µm
b) un module en traction (selon l'ISO 527-3) dans le sens transversal mesuré sur un film de 25 µm d'au moins 1300 MPa et d'au moins 1400 MPa mesuré sur un film de 20 µm
c) une résistance relative à la déchirure dans le sens machine [N/mm] selon le procédé d'Elmendorf (ISO 6383-2) pour une épaisseur de film de 25 µm d'au moins 60 N/mm et d'au moins 45 N/mm mesurée sur un film de 20 µm
d) une résistance relative à la déchirure dans le sens transversal [N/mm] selon le procédé d'Elmendorf (ISO 6383-2) pour une épaisseur de film de 25 µm d'au moins 100 N/mm et d'au moins 80 N/mm mesurée sur un film de 20 µm
e) un brillant (20°) selon l'ASTM D2457 pour une épaisseur de film de 25 µm d'au moins 130 % et pour une épaisseur de film de 20 µm d'au moins 110 %
f) un trouble selon l'ASTM D1003 pour une épaisseur de film de 25 µm d'au plus 4,5 % et pour une épaisseur de film de 20 µm d'au plus 5,5 %.

10. Structure de films stratifiés selon l'une quelconque des revendications précédentes, dans laquelle dans la couche d'étanchéité b₁) du second film, le polyéthylène linéaire basse densité produit par métallocène peut être unimodal ou multimodal, selon laquelle le polyéthylène linéaire basse densité produit par métallocène est un copolymère d'éthylène/alpha-oléfine en C3 à C20 ayant une masse volumique ISO 1183 (procédé A) de 905 à 940 kg/m3, de préférence de 910 à 937 kg/m3, un MFR2 selon l'ISO 1133 (190 °C) situé dans la plage allant de 0,01 à 20 g/10 min, de préférence de 0,2 30 à 10 g/10 min, de manière davantage préférée de 0,3 à 6,0 g/10 min, et de manière préférée entre toutes de 0,4 à 4,0 g/10 min.

11. Structure de films stratifiés selon l'une quelconque des revendications précédentes, dans laquelle le second film comprend en outre une couche b₂) comprenant un terpolymère bimodal d'éthylène/1-butène/alpha-oléfine en C6 à C12, ayant une masse volumique située entre 926 kg/m³ et 950 kg/m³ tel que défini pour la couche centrale (C) du premier film.

12. Structure de films stratifiés selon la revendication 11, dans laquelle le second film comprend en outre une seconde couche de film supplémentaire b₃) formant une structure de films à 3 couches b₃/b₂/b₁, selon laquelle la seconde couche de film supplémentaire b₃) est faite du même LDPE que celui utilisé pour la couche d'étanchéité b₁)

13. Structure de films stratifiés selon la revendication 11, dans laquelle le second film comprend la couche d'étanchéité b₁, la au moins une couche supplémentaire b₂, et en outre 3 couches supplémentaires b₄, b₅ et b₆, formant un film de la structure b₆/b₅/b₄/b₁/b₂, dans laquelle b₂, b₄ et b₅ sont composés d'un terpolymère tel que défini pour la couche centrale (C) du premier film et une couche b₆ est composée d'un mélange de terpolymère tel que défini pour la couche centrale (C) du premier film et d'un polyéthylène linéaire basse densité produit par métallocène (mLLDPE) tel que défini pour la couche d'étanchéité b₁ du second film.

14. Utilisation du premier film tel que défini dans la revendication 1 pour produire des structures de films stratifiés, selon laquelle le premier film est orienté de manière uniaxiale dans le sens machine (MD) et présente une épaisseur de film après orientation de 10 à 27 µm.

15. Utilisation du premier film selon la revendication 14 pour produire des structures de films stratifiés, selon laquelle le premier film est orienté de manière uniaxiale dans le sens machine (MD) et présente une épaisseur de film après orientation de 18 à 22 µm.
